# EUROPEAN PATENT APPLICATION

(11) **EP 4 650 212 A1**
(43) Date of publication of application: **19.11.2025**
(21) Application number: 25174384.5
(22) Date of filing: 06.05.2025
(51) Int. Cl.: B60L 53/122, B60L 53/20, H02J 50/12

(54) **SWITCHING CIRCUITS TO REDUCE LEAKAGE CURRENT IN INDUCTIVE CHARGING**

(30) Priority: 14.05.2024 US 202463647305 P; 09.10.2024 US 202463705343 P
(71) Applicant: Tesla, Inc., Austin, TX 78725 (US)
(72) Inventor: ZHENG, Liran, Austin, Texas, 78725 (US); PAN, Fei, Austin, Texas, 78725 (US); ZHANG, Xuan, Austin, Texas, 78725 (US)
(74) Representative: Liesegang, Eva

(57) **Abstract**

A method of wireless power transfer can include toggling a switching circuit of a ground pad alternately and sequentially between a first switch configuration and a second switch configuration with an unbalanced duty cycle, and causing wireless power transfer from the ground pad to a vehicle pad of a vehicle using a voltage. The voltage across a resonant tank electrically connected to the switching circuit can be different from a medium voltage for both the first switch configuration and the second switch configuration. The switching circuit can be configured to provide a high voltage, a low voltage, or the medium voltage across the resonant tank. Related wireless charging pads and methods of operating a vehicle pad are also disclosed.

## Description

### CROSS-REFERENCE TO PRIORITY APPLICATIONS

This application claims priority to U.S. Provisional Patent Application No. 63/647,305, entitled "SWITCHING CIRCUITS TO REDUCE LEAKAGE CURRENT IN INDUCTIVE CHARGING," filed on May 14, 2024, the technical disclosure of which is hereby incorporated by reference in its entirety and for all purposes. This application claims priority to U.S. Provisional Patent Application No. 63/705,343, entitled "SWITCHING CIRCUITS TO REDUCE LEAKAGE CURRENT IN INDUCTIVE CHARGING," filed on October 9, 2024, the technical disclosure of which is hereby incorporated by reference in its entirety and for all purposes.

### TECHNICAL FIELD

The present disclosure relates to systems and methods for wireless charging. More particularly, embodiments of the present disclosure relate to wireless charging systems and mechanisms for charging vehicles using wireless charging circuits.

### BACKGROUND

Generally described, inductive charging, commonly referred to as wireless charging, is a type of wireless power transfer. Inductive charging uses electromagnetic induction to generate, or otherwise provide, electricity to devices without necessarily requiring physical electrical connectivity. Specifically, various devices can be placed near a charging station or inductive pad without being precisely aligned or making electrical contact, a physical dock, an electric plug, and the like. Such devices can include, but are not limited to, vehicles, manufacturing equipment, consumer electronics, medical devices, and the like.

### SUMMARY OF CERTAIN INVENTIVE ASPECTS

The systems, methods and devices of this disclosure each have several innovative embodiments, no single one of which is solely responsible for all of the desirable attributes disclosed herein. Details of one or more implementations of the subject matter described in this specification are set forth in the accompanying drawings and the description below.

In some aspects, the techniques described herein relate to a method of wireless power transfer, the method including: toggling a switching circuit of a ground pad alternately and sequentially between a first switch configuration and a second switch configuration with an unbalanced duty cycle, wherein a voltage across a resonant tank electrically connected to the switching circuit is different from a medium voltage for both the first switch configuration and the second switch configuration, and wherein the switching circuit is configured to provide a high voltage, a low voltage, or the medium voltage across the resonant tank; and causing wireless power transfer from the ground pad to a vehicle pad of a vehicle using the voltage.

In some aspects, the techniques described herein relate to a method, wherein the medium voltage is associated with a third switch configuration to which the switching circuit does not toggle during the toggling.

In some aspects, the techniques described herein relate to a method, wherein the switching circuit is an H bridge circuit, and wherein the medium voltage is 0 Volts.

In some aspects, the techniques described herein relate to a method, wherein the switching circuit is a stacked half bridge circuit, and wherein the medium voltage is half of a first voltage associated with the first switch configuration.

In some aspects, the techniques described herein relate to a method, wherein the toggling includes being in the first switch configuration for at least 60% of a switching cycle and being in the second switch configuration for a remainder of the switching cycle.

In some aspects, the techniques described herein relate to a method, wherein the toggling includes being in the first switch configuration for at least 70% of a switching cycle and being in the second switch configuration for a remainder of the switching cycle.

In some aspects, the techniques described herein relate to a method, wherein the toggling is performed in response to detecting a voltage of a battery pack of the vehicle satisfies a threshold.

In some aspects, the techniques described herein relate to a method, wherein the toggling is performed in response to detecting a charge level of a battery pack of the vehicle satisfies a threshold.

In some aspects, the techniques described herein relate to a method, wherein the voltage across the resonant tank has an opposite polarity for the second switch configuration than for the first switch configuration.

In some aspects, the techniques described herein relate to a method, wherein the vehicle comprises a battery pack that is configured to charge based on the wireless power transfer, and wherein a voltage range of the battery pack of the vehicle is between 100 Volts and 1000 Volts.

In some aspects, the techniques described herein relate to a method of operating a vehicle pad in a wireless charging environment, the method including: wirelessly receiving power from a ground pad at the vehicle pad of a vehicle, the vehicle pad including a switching circuit; and toggling the switching circuit alternately and sequentially between a first switch configuration and a second switch configuration with an unbalanced duty cycle, wherein the first switch configuration is associated with a high voltage across a resonant tank, wherein the second switch configuration is associated with a low voltage across the resonant tank, wherein the switching circuit is configured to provide one of the high voltage, the low voltage, or a medium voltage across the resonant tank, and wherein the medium voltage is below the high voltage and above the low voltage.

In some aspects, the techniques described herein relate to a method, wherein the medium voltage is associated with a third switch configuration to which the switching circuit does not toggle during the toggling.

In some aspects, the techniques described herein relate to a method, wherein the switching circuit is an H bridge circuit, and wherein the medium voltage is 0 Volts.

In some aspects, the techniques described herein relate to a method, wherein the switching circuit is a stacked half bridge circuit, and wherein the medium voltage is half of the high voltage.

In some aspects, the techniques described herein relate to a method, wherein the toggling includes being in the first switch configuration for at least 60% of a switching cycle and being in the second switch configuration for a remainder of the switching cycle.

In some aspects, the techniques described herein relate to a method, wherein the toggling includes being in the first switch configuration for at least 60% of a switching cycle and being in the second switch configuration for a remainder of the switching cycle.

In some aspects, the techniques described herein relate to a method, wherein the toggling is performed in response to detecting a voltage of the battery pack satisfies a threshold.

In some aspects, the techniques described herein relate to a method, wherein the toggling is performed in response to detecting a charge level of the battery pack satisfies a threshold.

In some aspects, the techniques described herein relate to a method, wherein a voltage across the resonant tank has an opposite polarity for the second switch configuration than for the first switch configuration.

In some aspects, the techniques described herein relate to a method, wherein a voltage range of the battery pack of the vehicle is between 100 Volts and 1000 Volts.

In some aspects, the techniques described herein relate to a wireless charging pad including: a resonant tank including a coil arranged for wireless power transfer; a switching circuit electrically connected to the resonant tank, the switching circuit configurable into at least a first switch configuration associated with a high voltage across the resonant tank, a second switch configuration associated with a low voltage across the resonant tank, and a third switch configuration associated with a medium voltage across the resonant tank, wherein the medium voltage is greater than the low voltage and less than the high voltage; and a switch control circuit configured to toggle the switching circuit alternately and sequentially between the first switch configuration and the second switch configuration with an unbalanced duty cycle, wherein the wireless charging pad is configured to transfer sufficient wireless power for charging a battery pack of a vehicle with an operating voltage of at least 350 Volts.

In some aspects, the techniques described herein relate to a wireless charging pad, wherein the switching circuit includes an H bridge circuit, and wherein the medium voltage is 0 Volts.

In some aspects, the techniques described herein relate to a wireless charging pad, wherein a voltage across the resonant tank has an opposite polarity for the second switch configuration than for the first switch configuration.

In some aspects, the techniques described herein relate to a wireless charging pad, wherein the switching circuit includes a stacked half bridge circuit, and wherein the medium voltage is half of the high voltage.

In some aspects, the techniques described herein relate to a wireless charging pad, wherein the low voltage is 0 Volts.

In some aspects, the techniques described herein relate to a wireless charging pad, wherein to toggle the switching circuit includes being in the first switch configuration for at least 60% of a switching cycle and being in the second switch configuration for a remainder of the switching cycle.

In some aspects, the techniques described herein relate to a wireless charging pad, wherein to toggle includes being in the first switch configuration for at least 70% of a switching cycle and being in the second switch configuration for a remainder of the switching cycle.

In some aspects, the techniques described herein relate to a wireless charging pad, wherein to toggle the switching circuit alternately and sequentially is performed in response to detecting a voltage of the battery pack satisfies a threshold.

In some aspects, the techniques described herein relate to a wireless charging pad, wherein to toggle the switching circuit alternately and sequentially is performed in response to detecting a charge level of the battery pack satisfies a threshold.

In some aspects, the techniques described herein relate to a wireless charging pad, wherein the wireless charging pad is a vehicle pad of the vehicle.

In some aspects, the techniques described herein relate to a wireless charging pad, wherein the wireless charging pad is a ground pad.

In some aspects, the techniques described herein relate to a wireless charging pad, wherein a voltage range of the battery pack of the vehicle is between 100 Volts and 1000 Volts.

In some aspects, the techniques described herein relate to a wireless charging pad including: a resonant tank including a coil arranged for wireless power transfer; a stacked half bridge circuit electrically connected to the resonant tank, the stacked half bridge circuit configurable into at least a first switch configuration associated with a high voltage across the resonant tank, a second switch configuration associated with 0 Volts across the resonant tank, and a third switch configuration associated with a medium voltage across the resonant tank, wherein the medium voltage is a positive voltage that is less than the high voltage; and a switch control circuit configured to toggle the stacked half bridge circuit alternately and sequentially between the first switch configuration and the second switch configuration with an unbalanced duty cycle, wherein the wireless charging pad is configured to transfer sufficient wireless power for charging a battery pack of a vehicle with an operating voltage of at least 350 Volts.

In some aspects, the techniques described herein relate to a wireless charging pad, wherein the medium voltage is half of the high voltage.

In some aspects, the techniques described herein relate to a wireless charging pad, wherein a voltage range of the battery pack of the vehicle is between 100 Volts and 1000 Volts.

In some aspects, the techniques described herein relate to a wireless charging pad, wherein the wireless charging pad is a vehicle pad of the vehicle.

In some aspects, the techniques described herein relate to a wireless charging pad, wherein the wireless charging pad is a ground pad.

### BRIEF DESCRIPTION OF THE DRAWINGS

Throughout the drawings, reference numbers are re-used to indicate correspondence between referenced elements. The drawings are provided to illustrate examples of the subject matter described herein and not to limit the scope thereof.

Embodiments of the present disclosure are described with reference to the accompanying drawings, in which like reference characters reference like elements, and wherein:
FIG. 1A illustrates an example wireless charging environment in which embodiments of the present disclosure can be implemented.
FIG. 1B is a block diagram illustrating the example wireless charging environment of FIG. 1A in accordance with some embodiments of the present disclosure.
FIG. 1C illustrates a representation of a ground pad that may function as a wireless charging device in accordance with some embodiments of the present disclosure.
FIGS. 2A-2D illustrate example circuit schematic diagrams of wireless charging systems in accordance with some embodiments of the present disclosure.
FIG. 3 illustrates an example block diagram of a wireless charging pad according to some embodiments of the present disclosure.
FIGS. 4A-4D illustrate example switch configurations of a H bridge circuit of the wireless charging pad of FIG. 3 in accordance with some embodiments of the present disclosure.
FIGS. 5A-5B show example waveforms of voltage swings associated with operations of the wireless charging pad of FIG. 3 in accordance with some embodiments of the present disclosure.
FIGS. 6, 7A, 7B, 8A, and 8B show example voltage and current waveforms associated with operations of the wireless charging pad of FIG. 3 in accordance with some embodiments of the present disclosure.
FIG. 9 illustrates example circuit schematic diagram of a portion of a wireless charging system in accordance with some embodiments of the present disclosure.
FIG. 10 illustrates an example block diagram of a wireless charging pad according to some embodiments of the present disclosure.
FIGS. 11A, 11B, 11C, and 11D illustrate example switch configurations of a switching circuit of the wireless charging pad of FIG. 10 in accordance with some embodiments of the present disclosure.
FIGS. 12A-12B show example waveforms of voltage swings associated with operations of the wireless charging pad of FIG. 10 in accordance with some embodiments of the present disclosure.
FIGS. 13, 14, and 15 show example voltage and current waveforms associated with operations of the wireless charging pad of FIG. 10 in accordance with some embodiments of the present disclosure.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to systems and methods for wirelessly charging battery packs with improved energy transfer efficiency. Illustratively, aspects of the present disclosure relate to wireless charging circuits that can reduce power loss resulted from leakage current associated with coils (e.g., a ground pad coil and/or a vehicle pad coil) through controlling switches of power electronics. In some embodiments, a switch control circuit may control switches of a switching circuit (e.g., a H bridge circuit, a stacked half circuit, or the like) to toggle between some switch configurations without toggling to other switch configuration(s). As such, a voltage across a resonant tank interfaced with the switching circuit may be at a high voltage or a low voltage, but may not be at a medium voltage during such toggling.

In some embodiments, when the switching circuit is the H bridge circuit, the high voltage may be in a range from 300 Volts to 600 Volts, the low voltage may be in a range from -300 Volts to -600 Volts, and the medium voltage may be around 0 Volts. In some other embodiments, when the switching circuit is the stacked half bridge circuit, the high voltage may be in a range from 700 Volts to 1000 Volts, the low voltage may be around 0 Volts, and the medium voltage may be in a range from 350 Volts to 500 Volts.

For example, when the switching circuit is the H bridge circuit, the switch control circuit may control switches of the H bridge circuit when wirelessly charging a vehicle to toggle between switch configurations without shorting a resonant tank (e.g., the voltage across the resonant tank may toggle between a high voltage (e.g., between 300 Volts to 600 Volts) and a low voltage (e.g., between -300 Volts to -600 Volts) without staying at a medium voltage of about 0 Volts) The resonant tank can be interfaced with the H bridge circuit. The switch control circuit may control the switches of the H bridge circuit to repeatedly switch between two switch configurations with an unbalanced temporal duration (e.g., staying 60% to 80% of time in one switch configuration and staying 40% to 20% of time in the other switch configuration) without shorting the resonant tank. Advantageously, avoiding or reducing occurrences of shorting the resonant tank can reduce a common mode voltage associated with the resonant tank and the H bridge circuit.

As another example, when the switching circuit is the stacked half bridge circuit, the switch control circuit may control switches of the stacked half bridge circuit to toggle between switch configurations such that volage across a resonant tank interfaced with the stacked half bridge circuit toggles between a high voltage (e.g., between 700 Volts to 1000 Volts) and a low voltage (e.g., around 0 Volts) without staying at a medium voltage (e.g., between 350 Volts to 500 Volts).

In embodiments disclosed herein, leakage current associated with a wireless charging system can be reduced as a result of switch control methods disclosed herein. This can reduce energy consumption, reduce electromagnetic interference, and/or minimize conducted and radiative emissions.

Wireless charging devices are usable to wirelessly charge a vehicle, such as an electric vehicle with a battery pack. A wireless charging device (e.g., a ground pad or a vehicle pad) may cause power received from an external source, such as the grid, solar cell(s), and so on, to be wirelessly transmitted (e.g., via induction) to the electric vehicle. A ground pad may be positioned under a vehicle pad of an electric vehicle to charge the electric vehicle. A wireless charging direct current (DC)/DC converter (also referred to as aggregated DC/DC power converter) can include a DC/alternating current (AC) inverter in the ground pad, and an AC/DC rectifier in the vehicle pad. Power can be transmitted wirelessly from the ground pad to the vehicle pad.

During operations of a wireless charging system, leakage current may be generated across a charging coil (e.g., vehicle pad coil and/or a ground pad coil). For example, the ground pad coil may generate a leakage current associated with a ground pad. This leakage current can flow through a parasitic capacitor to a heat sink associated with the ground pad. In some cases, relatively high leakage current may be generated due to planar shape, relatively large surface area, and/or relatively large parasitic capacitance associated with the charging coil. This may result in significant energy loss and undesirable power transfer efficiency. Although a medium voltage (e.g., 0 Volts for a H bridge switching circuit) may be applied across a resonant tank (e.g., shorting the resonant tank) for a fraction (e.g., 10%, 20%, 30%, 40%) of time during wireless charging to accommodate different operating points under various voltage and power levels for reducing coil current, the medium voltage applied across the resonant tank may increase a common mode voltage associated with the resonant tank. An increased common mode voltage may lead to increased leakage current, which can contribute to power loss or energy waste.

To address at least a portion of the above problems, some embodiments of the present disclosure relate to a wireless charging pad capable of charging battery packs with reduced leakage current. In some embodiments, without shorting a resonant tank or letting a voltage across the resonant tank to be at a medium voltage that is around 0 Volts for a considerable portion of time (e.g., > 10% of operation time) while wirelessly charging a battery pack, a switch control circuit may control switches of a H bridge circuit to switch among particular configurations with unbalanced or unequal duration. In some embodiments, the switch control circuit may control the H bridge circuit to repeatedly switch between a first switch configuration that is associated with a high voltage (e.g., v volts, where v is greater than 100) and a second switch configuration that is associated with a low voltage (e.g., -v volts), without switching to a third switch configuration that is associated with the medium voltage that is around 0 Volts. The H bridge circuit may be in the first switch configuration between 60% to 80% of total operation time and be in the second switch configuration between 40% to 20% of the total operation time.

**In** some embodiments, in the first switch configuration, a voltage across two tank terminals of a resonant tank coupled to the H bridge circuit may be v. In the second switch configuration, the voltage across the two tank terminals of the resonant tank coupled to the H bridge circuit may be -v. Advantageously, common mode voltage and leakage current associated with the resonant tank and the H bridge circuit may be reduced for repeatedly switching between the first switch configuration and the second switch configuration compared with situations where the resonant tank is shorted for a considerable portion (e.g., above 10% of total operation time) of time.

In some other embodiments, when the switching circuit is the stacked half bridge circuit, the switch control circuit may control switches of the stacked half bridge circuit to toggle between a first switch configuration that is associated with a high voltage and a second switch configuration that is associated with a low voltage. The switch control circuit can toggle the switching circuit between the first switch configuration and the second configuration without setting the switching circuit to a third switch configuration that is associated with a medium voltage. As such, a voltage across a resonant tank interfaced with the stacked half bridge circuit may be at the high voltage (e.g., v, where v being between 700 Volts to 1000 Volts) when the stacked half bridge circuit is in the first switch configuration, or at the low voltage (e.g., 0 Volts) when the stacked half bridge circuit is in the second switch configuration. However, the voltage across the resonant tank may not be at the medium voltage (e.g., 0.5v) that is half or 50% of the high voltage during such toggling. Advantageously, leakage current associated with a wireless charging system can be reduced. Such switching operation can also reduce energy consumption, reduce electromagnetic interference, and/or minimize conducted and radiative emissions. Further, controlling the stacked half bridge circuit to switch between the first switch configuration and the second switch configuration without switching to the third switch configuration may increase a voltage range for charging a battery pack of a vehicle (e.g., allow charging the battery pack at higher voltage).

Although various aspects will be described in accordance with illustrative embodiments and combination of features, one skilled in the relevant art will appreciate that the examples and combination of features are illustrative in nature and should not necessarily be construed as limiting. More specifically, aspects of the present application may be applicable with various types of vehicle charging mechanisms, power sources, interfaces, and the like. Still further, although specific H bridge circuit schematic for charging batteries and/or battery packs under different voltage levels will be described, such illustrative H bridge circuit schematic should not necessarily be construed as limiting. Accordingly, one skilled in the relevant art will appreciate that the aspects of the present application are not necessarily limited to application to any particular type of vehicle, vehicle charging infrastructure, communications or illustrative interactions between vehicles, owners/users and wireless battery charging systems.

### Overview of Wireless Charging

Generally described, inductive charging, commonly referred to as wireless charging, is a type of wireless power transfer. Inductive charging uses electromagnetic induction to generate, or otherwise provide, electricity to devices without requiring physical electrical connectivity. Specifically, various devices can be placed near a charging station or inductive pad without needing to be precisely aligned or make electrical contact, a physical dock, an electric plug and the like. Such devices include, but are not limited to, vehicles, manufacturing equipment, consumer electronics, medical devices, and the like.

In accordance with aspects of the present application, inductive charging systems are configured to transfer energy through inductive coupling between components. An illustrative charging system includes a transferring component, which may be configured as a charging station or charging pad. A charging pad for wirelessly transferring power to a vehicle can be referred to as a ground pad. An alternating current (e.g., an input current) from a power source passes through an induction coil in the charging station or pad. Based on the input current, the moving electric charge through the induction coil (e.g., a ground pad coil) creates (or elicits) a magnetic field. Illustratively, the strength of the magnetic field may fluctuate, at least in part, on changes or fluctuations in the input electric current's amplitude. The changing magnetic field creates an alternating electric current in an induction coil on a receiving device (e.g., a vehicle pad coil). The induced alternating current in the receiving device can then pass through a rectifier, converting the induced alternating current to a direct current. Finally, the receiving vehicle can include additional charging components and/or systems that utilize the converted direct current to charge battery systems, provide operating power, or a combination thereof.

Greater distances between the ground pad and vehicle pad coils can be achieved when illustrative inductive charging systems use resonant inductive coupling components/techniques. More specifically, in some embodiments, a capacitor can be connected to each induction coil to create two LC circuits with a specific resonance frequency. The frequency of the alternating current is matched with the resonance frequency. Additionally, the matched frequency can be further chosen depending on a typical distance between the sending device and the receiver device with consideration for peak efficiency. Still further, use of other materials for the receiver coil such as silver-plated copper or sometimes aluminum to minimize weight and decrease resistance can be utilized for purposes of energy transfer efficiencies.

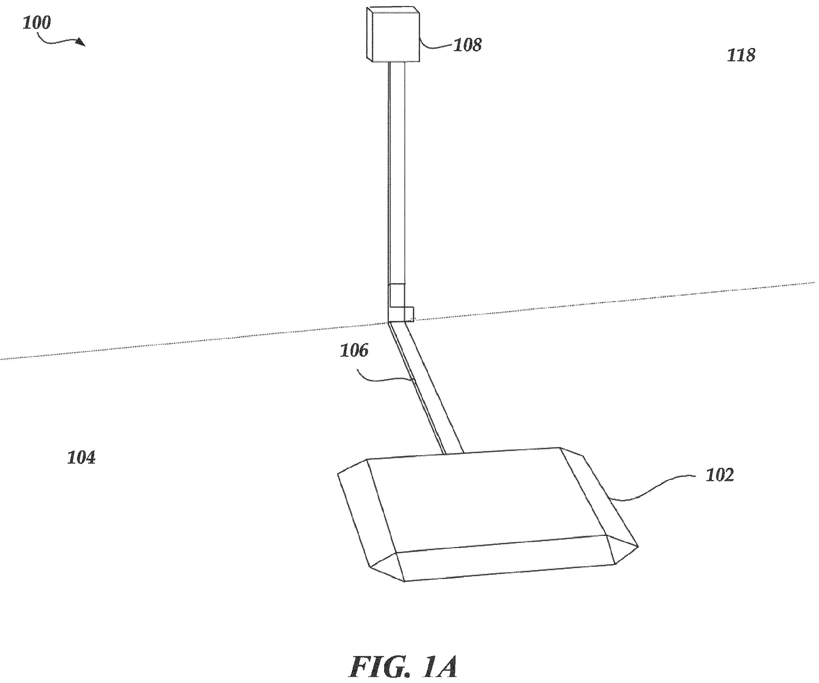

FIG. 1A is a diagram illustrative of an environment 100 for implementing an induction-based wireless charging system in accordance with various aspects of the present application. The environment 100 illustratively can correspond to commercial implementations, such as parking lots, parking stalls, charging booths, and the like. The environment 100 can correspond to private or other non-commercial implementations, such as private residences, etc. By way of an illustrative example, an implementation of an induction-based wireless charging system in a non-commercial implementation can include a ground pad 102 that is configured to generate variable magnetic fields in accordance with an induction charging methodology. As also illustrated in FIG. 1A, the ground pad 102, which can also be referred to as a transmitting component, can correspond to a stand-alone component that may be operable to be mounted or placed on a floor 104 or other planar surface. In some other embodiments, the ground pad 102 can be integrated or combined with other devices or components.

The ground pad 102 may be connected to one or more power sources, such as an input from a utility company, real-time power sources (e.g., solar cells or wind energy sources), stored energy cells, or a combination thereof. The power sources are configured to provide the input alternating current as described herein. The ground pad 102 may be connected via direct electric connection 106 to the power source, such as via a junction box 108 located on a wall surface 118.

As illustrated in FIG. 1A, in one embodiment, the ground pad 102 corresponds to a form factor that allows for the location on the floor 104 for wirelessly charging with a vehicle having a vehicle pad coil. The ground pad 102 may have a form factor such that the vehicle may be located directly above a top surface of the ground pad 102. Illustratively, the dimensions of the ground pad 102 (e.g., the height and width of the ground pad 102) may be configured so that a distance between the top surface of the ground pad 102 and a bottom surface of the vehicle meets specific criteria, such as minimum distance between the ground pad coil and vehicle pad coil, maximum distance between the ground pad coil and the vehicle pad coil, and the like. In some embodiments, the vehicle pad and/or ground pad 102 (or combination) may be configured with additional components for adjusting (e.g., statically adjusting and/or dynamically adjusting) such distance or otherwise changing the relative orientation between the ground pad 102 and the vehicle.

In some embodiments, the ground pad 102 can be configured to charge a battery pack of a vehicle, wherein the battery pack can have a nominal voltage of over 200 Volts (e.g., a nominal voltage of about 350 Volts or 355 Volts) and a maximum voltage of 400 Volts. In some embodiments, the ground pad 102 can be configured to supply 800 Volts of direct current power. In some embodiments, the ground pad 102 can supply a voltage in a range from about 100 Volts to 1000 Volts. The ground pad 102 can wirelessly transfer sufficient power to charge battery packs with such voltages.

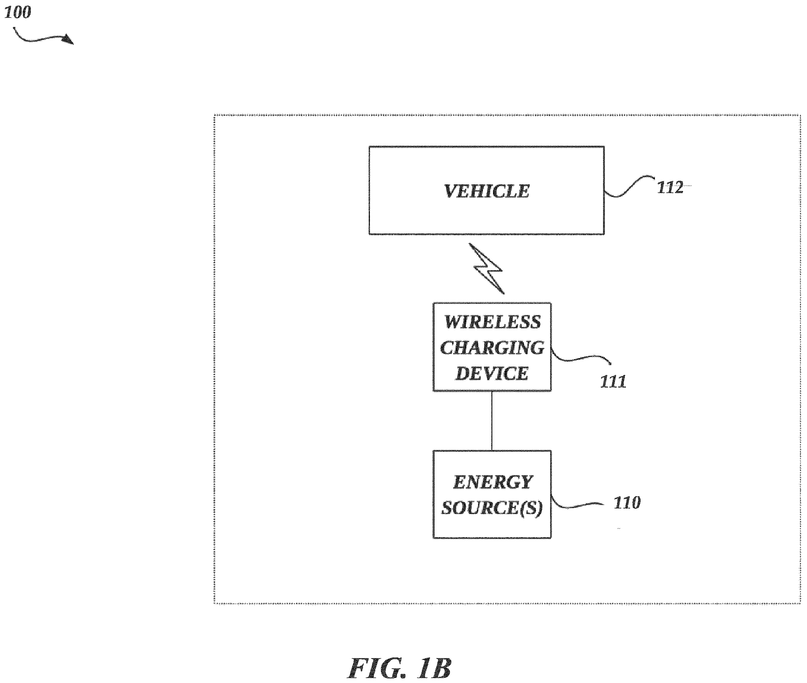

FIG. 1B illustrates a block diagram of the environment 100 including a wireless charging device 111 (e.g., the ground pad 102) in wireless communication with a vehicle 112, such as via induction-based magnetic fields. The wireless charging device 111 is further connected to one or more energy sources 110. Although the wireless charging device 111 is illustrated with a direct connection to the energy sources 110, at least some portion of the input alternating current could be provided via a wireless transmission method. Additionally, in embodiments with multiple power sources, the environment may also include various switching components to cause the selection of energy from individual energy sources 110 or a combination of energy sources 110.

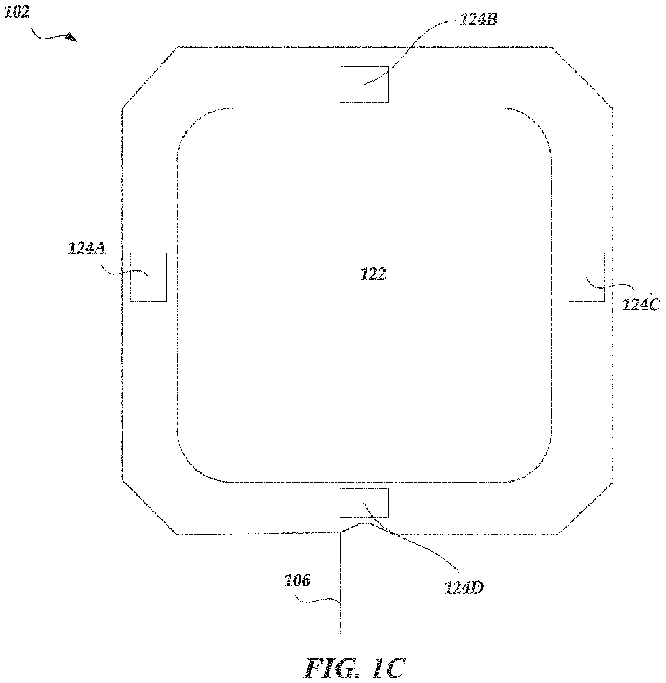

FIG. 1C illustrates a block diagram of a ground pad 102 that may function as a wireless charging device 111 (shown in FIG. 1B). The ground pad 102 can include at least a ground pad coil 122 for causing the generation of magnetic fields from an input current provided from an energy source 110. As illustrated in FIG. 1C, the input current can be provided by a direct electric connection 106.

In some embodiments, the ground pad 102 can also include various sensor components 124A, 124B, 124C, 124D related to the charging process. By way of illustration, the sensor components 124A, 124B, 124C, 124D can be configured for various functions, such as detection of the vehicle 112, detection of objects, measurement of distances to the vehicle, environmental sensors (e.g., temperature sensors, moisture sensors), pressure sensors, and the like. In an embodiment, the sensor components 124A, 124B, 124C, 124D can include radar sensors. The sensor components 124A, 124B, 124C, 124D can include logic and processing components related to the charging process including operational measurements, operational control, safety measurements, communication components and the like.

### Wireless Charging Systems with H Bridge Circuits

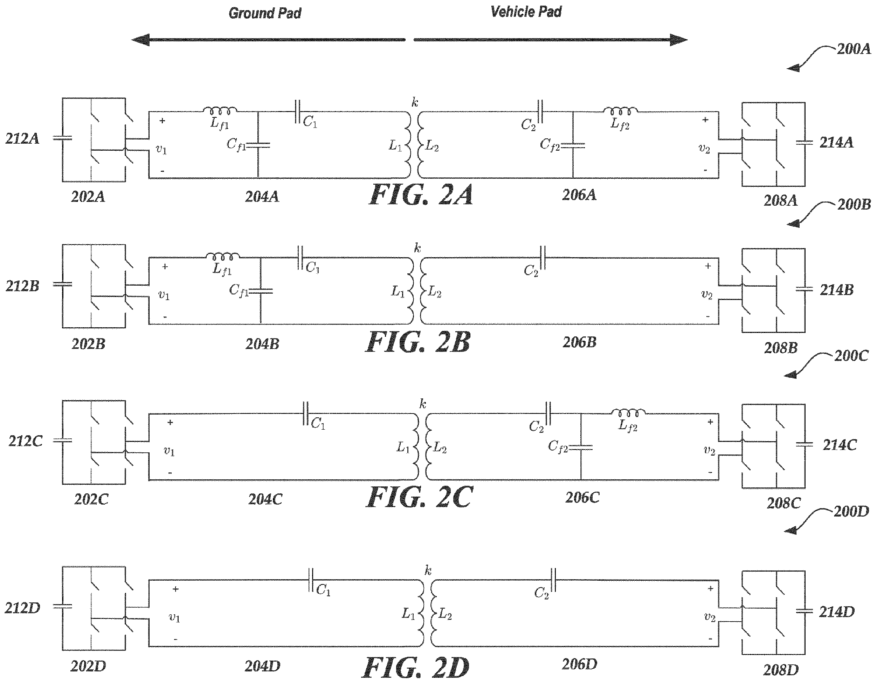

FIGS. 2A-2D illustrate circuit schematic diagrams of example wireless charging systems 200A-200D. As shown in FIGS. 2A-2D, each of the wireless charging systems 200A-200D may include a ground pad (e.g., the ground pad 102) and a vehicle pad that is attached to or otherwise integrated with a vehicle. For example, the ground pad of the wireless charging system 200A may include a capacitor 212A, a H bridge circuit 202A, and a resonant tank 204A as shown in FIG. 2A. A vehicle pad of the wireless charging system 200A may include a capacitor 214A, a H bridge circuit 208A, and a resonant tank 206A, for example, as shown in FIG. 2A. In some embodiments, power may be transferred from a power source (not shown in FIG. 2A) through the H bridge circuit 202A, the resonant tank 204A, the resonant tank 206A, and the H bridge circuit 208A to a battery pack (not shown in FIG. 2A) of a vehicle. This power transfer can include wireless power transfer from a coil L1 of the ground pad to a coil L2 of the vehicle pad. Any of the wireless charging systems 200A-200D can be implemented in accordance with any suitable principles and advantages disclosed herein.

FIG. 2A illustrates a circuit schematic diagram of the wireless charging system 200A. As shown in FIG. 2A, the wireless charging system 200A corresponds to an LCC-LCC circuit architecture. As illustrated, the wireless charging system 200A includes the capacitor 212A, the H bridge circuit 202A, the resonant tank 204A, the resonant tank 206A, the H bridge circuit 208A, and the capacitor 214A. In an LCC-LCC circuit architecture, an inductor L_{f1} and capacitors C_{f1} and C₁ are coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2B illustrates a circuit schematic diagram of the wireless charging systems 200B. As shown in FIG. 2B, the wireless charging system 200B corresponds to a LCC-Series circuit architecture. As illustrated, the wireless charging system 200B includes the capacitor 212B, the H bridge circuit 202B, the resonant tank 204B, the resonant tank 206B, the H bridge circuit 208B, and the capacitor 214B. In an LCC-series circuit architecture, an inductor L_{f1} and capacitors C_{f1} and C₁ are coupled between the H bridge circuit 202A and the ground pad coil L₁ in the ground pad, and the series capacitor C₂ is coupled between the H bridge circuit 208A and the vehicle pad coil L₂ in the vehicle pad.

FIG. 2C illustrates a circuit schematic diagram of the wireless charging systems 200C. As shown in FIG. 2C, the wireless charging system 200C corresponds to a Series-LCC circuit architecture. As illustrated, the wireless charging system 200C includes the capacitor 212C, the H bridge circuit 202C, the resonant tank 204C, the resonant tank 206C, the H bridge circuit 208C, and the capacitor 214C. In a series-LCC circuit architecture, series capacitor C₁ is coupled between the H bridge circuit 202A and the ground pad coil L₁ in the ground pad, and the inductor L_{f2} and capacitors C_{f2} and C₂ are coupled between the H bridge circuit 208A and the vehicle pad coil L₂ in the vehicle pad.

FIG. 2D illustrates a circuit schematic diagram of the wireless charging systems 200D. As shown in FIG. 2D, the wireless charging system 200D corresponds to a Series-Series circuit architecture. As illustrated, the wireless charging system 200D includes the capacitor 212D, the H bridge circuit 202D, the resonant tank 204D, the resonant tank 206D, the H bridge circuit 208D, and the capacitor 214D. In a series-series circuit architecture, series capacitor C₁ is coupled between the H bridge circuit 202A and the ground pad coil L₁ in the ground pad, and series capacitor C₂ is coupled between the H bridge circuit 208A and the vehicle pad coil L₂ in the vehicle pad.

### Example Wireless Charging Pad

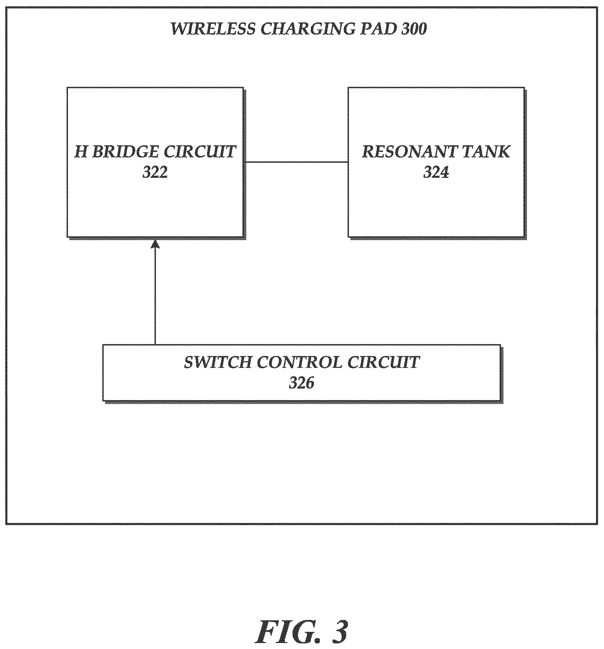

FIG. 3 illustrates an example wireless charging pad 300 in accordance with some embodiments of the present disclosure. The wireless charging pad 300 includes a H bridge circuit 322, a resonant tank 324, and a switch control circuit 326. The wireless charging pad 300 can charge battery packs of vehicles under relatively wide voltage ranges through toggling switches of the H bridge circuit 322. Any suitable principles and advantages of the wireless charging pad 300 can be implemented in an environment in accordance with any suitable principles and advantages of FIGS. 1A to 1C.

The wireless charging pad 300 may be implemented on any ground pads or vehicle pads of the wireless charging systems 200A-200D to reduce leakage current associated with ground pad coils and/or vehicle pad coils. For example, the wireless charging pad 300 may be a ground pad and/or a vehicle pad of any of the wireless charging systems 200A-200D. In some embodiments, the H bridge circuit 322 can correspond to any of the H bridge circuit 202A, H bridge circuit 208A, H bridge circuit 202B, H bridge circuit 208B, H bridge circuit 202C, H bridge circuit 208C, H bridge circuit 202D, and H bridge circuit 208D. The resonant tank 324 can correspond to any of the resonant tank 204A, resonant tank 206A, resonant tank 204B, resonant tank 206B, resonant tank 204C, resonant tank 206C, resonant tank 204D, and resonant tank 206D.

In some embodiments, rather than switching switches of the H bridge circuit 322 to short the resonant tank 324 for a considerable portion (e.g., greater than 10% of total operation time) of time, the switch control circuit 326 may control the switches of the H bridge circuit 322 such that the H bridge circuit 322 do not short the resonant tank 324 while wirelessly charging a vehicle. Advantageously, common mode voltage and leakage current associated with the resonant tank 324 and the H bridge circuit 322 may be reduced compared with situations where the resonant tank 324 is shorted for a considerable portion (e.g., 10% of total operation time) of time.

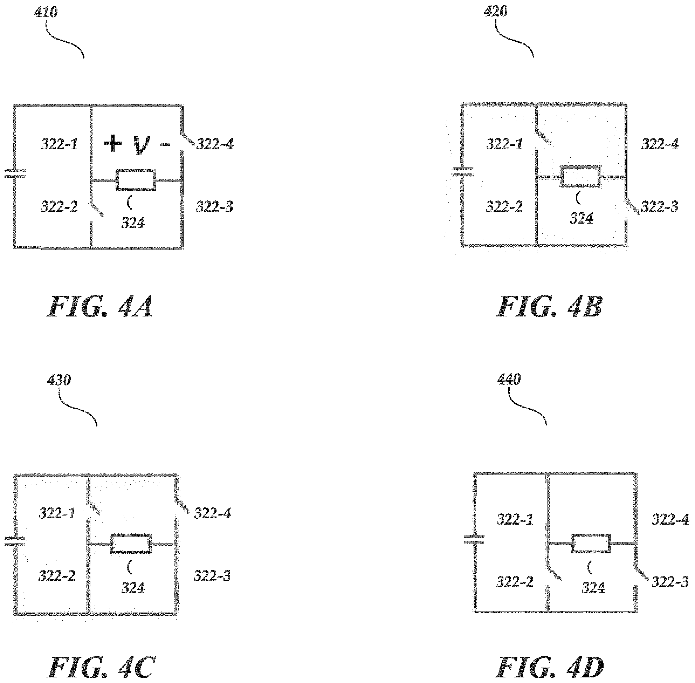

The switch control circuit 326 can provide control signals to control the states of the switch of the H bridge circuit 322 (e.g., switches 322-1 to 322-4 of FIGS. 4A to 4D). The switch control circuit 326 can be implemented by any suitable circuitry to control the state of the switches of the H bridge circuit 322. When switches of the H bridge circuit 322 have gates (e.g., the switches are FETs or IGBTs), the switch control circuit 326 can provide control signals to gates of the H bridge. In such instances, the switch control circuit 326 can be referred to as a gate drive circuit.

### Example H Bridge Switch Configurations

FIGS. 4A-4D show example switch configurations of the H bridge circuit 322 that may be controlled by the switch control circuit 326 in accordance with some embodiments of the present disclosure. FIG. 4A shows the H bridge circuit 322 may be configured by the switch control circuit 326 to a switch configuration 410, which can be referred to as a positive configuration. The positive configuration of FIG. 4A is a high voltage configuration. FIG. 4B shows the H bridge circuit 322 may be configured by the switch control circuit 326 to a switch configuration 420, which can be referred to as a negative configuration. The negative configuration of FIG. 4B is a low voltage configuration. FIG. 4C shows the H bridge circuit 322 may be configured by the switch control circuit 326 to a switch configuration 430, which can be referred to as a zero 1 configuration. FIG. 4D shows the H bridge circuit 322 may be configured by the switch control circuit 326 to a switch configuration 440, which can be referred to as a zero 2 configuration. The zero 1 and zero 2 configurations of FIGS. 4C and 4D, respectively, are medium voltage configurations.

The H bridge circuit 322 includes four switches switch 322-1, switch 322-2, switch 322-3, and 322-4. These switches can be any suitable switches for power electronics, such as n type field effect transistors arranged to switch sufficient voltage for wireless charging disclosed herein. In certain applications, the H bridge circuit 322 can include metal oxide field effect transistors (MOSFETs). Alternatively or additionally, the H bridge circuit 322 can include insulated-gate bipolar transistors (IGBTs). The switches of the H bridge circuit 322 can be arranged to pass 100s of Volts. The H bridge circuit 322 includes a first half bridge and a second half bridge. The first half bridge includes switches 322-1 and 322-2. The second half bridge includes switches 322-3 and 322-4.

As shown in FIG. 4A, in switch configuration 410, the switch 322-1 is closed, the switch 322-2 is open, the switch 322-3 is closed, and the switch 322-4 is open. As shown in FIG. 4B, in switch configuration 420, the switch 322-1 is open, the switch 322-2 is closed, the switch 322-3 is open, and the switch 322-4 is closed. As shown in FIG. 4C, in switch configuration 430, the switch 322-1 is open, the switch 322-2 is closed, the switch 322-3 is closed, and the switch 322-4 is open. As shown in FIG. 4D, in switch configuration 440, the switch 322-1 is closed, the switch 322-2 is open, the switch 322-3 is open, and the switch 322-4 is closed.

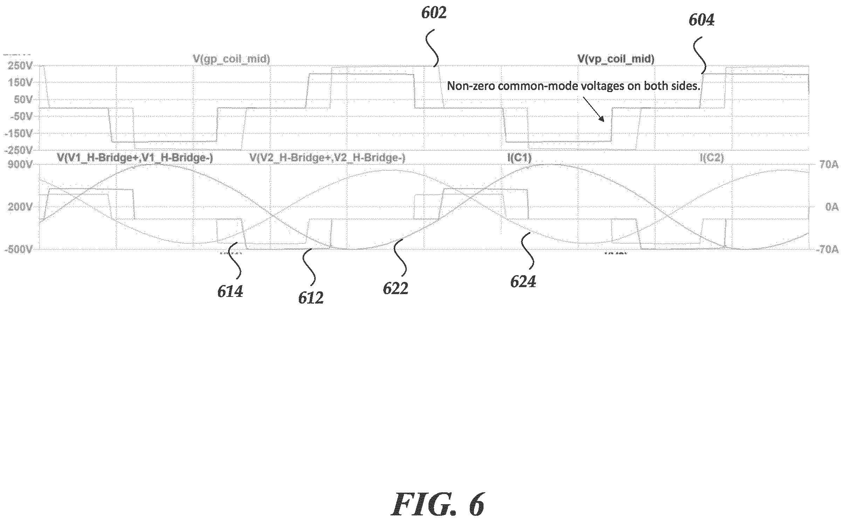

In some embodiments, rather than switching to the switch configuration 430 and/or the switch configuration 440, the switch control circuit 326 may control the switch 322-1, switch 322-2, switch 322-3, and switch 322-4 to switch among the switch configuration 410 and the switch configuration 420 with unequal temporal duration. As such, the resonant tank 324 may not be shorted during wireless charging a vehicle. Compared with situations where the H bridge circuit 322 switches to the switch configuration 430 and/or the switch configuration 440, common mode voltage and leakage current associated with the resonant tank 324 and the H bridge circuit 322 may be reduced, as will be illustrated in FIGS. 6, 7A, 7B, 8A, and 8B.

### Example Voltage Swing Waveforms

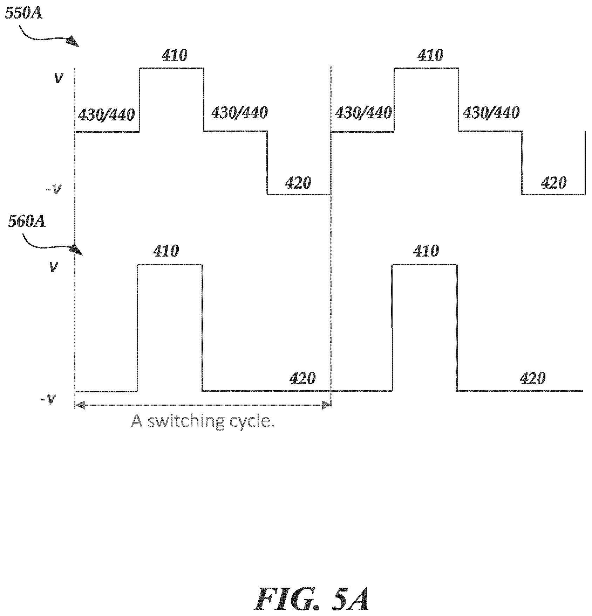

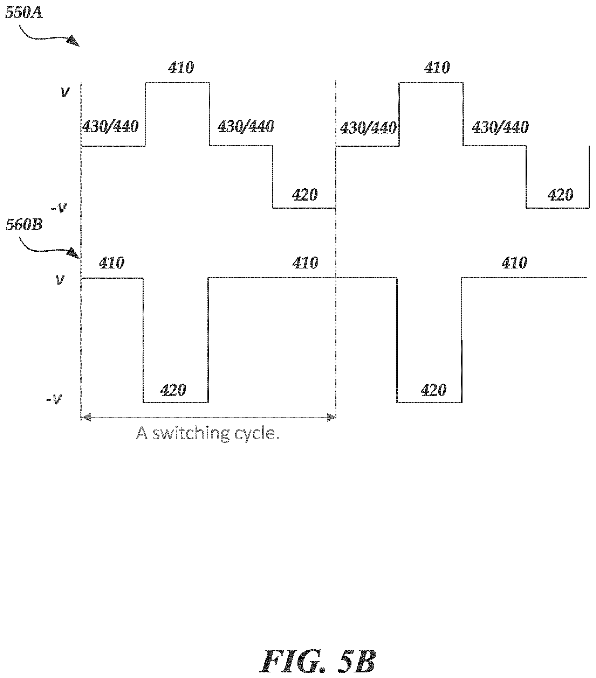

H bridge circuits can repeatedly switch between various (e.g., two or more) switch configurations. Examples of toggling between various switch configurations will be discussed with reference to FIGS. 5A and 5B. Such toggling between various switch configurations can be performed by an H bridge circuit on a ground pad, an H bridge circuit on a vehicle pad, or H bridge circuits on both a ground pad and a vehicle pad. In some instances, such toggling between various switch configurations can be performed by an H bridge circuit on a ground pad and a vehicle pad can have a different switching circuit topology. According to some other instances, such toggling between various switch configurations can be performed by an H bridge circuit on a vehicle pad and a ground pad can have a different switching circuit topology.

In some instances, a switch control circuit 326 can cause the H bridge to alternately and sequentially toggle between two switch configurations associated with non-zero voltages in response to a wireless charging pad detecting one or more conditions. The one or more conditions can include, but are not limited to, a battery voltage satisfying a threshold such as being above a high voltage threshold or below a low voltage threshold, a battery charge level satisfying a threshold such as being above a high charge threshold or below a low charge threshold, a voltage provided to a ground pad satisfying a threshold such as being above a high voltage threshold or below a low voltage threshold, a lighter load interfaced with the H bridge circuit, lower voltage ranges or higher voltage ranges associated with a battery pack to be charged, or the like. Alternatively or additionally, the one or more conditions can include battery voltage being within certain ranges (e.g., due to battery packs having different voltage levels or different levels of state of charge of a battery pack), voltage provided to a ground pad being within certain ranges, specified power level being within certain ranges, parking inaccuracy being within certain ranges, or measured inductance variations being in certain ranges. Toggling between switching configurations in accordance with any suitable principles and advantages disclosed herein can be used as a default mode or the only switching mode in some applications. Toggling between switching configurations in accordance with any suitable principles and advantages disclosed herein can be used for wireless power transfer associated with charging one or more particular battery chemistries in various instances.

FIG. 5A shows example waveforms 550A and 560A associated with operations of the wireless charging pad 300 of FIG. 3 in accordance with some embodiments of the present disclosure. More specifically, the waveforms 550A and 560A illustrate voltage swings and voltage across the resonant tank 324 as the H bridge circuit 322 switches between various switch configurations. The voltage across the resonant tank 324 may correspond to the voltage *ν*₁ (shown in FIGS. 2A-2D) associated with any of the resonant tank 204A, resonant tank 204B, resonant tank 204C, or resonant tank 204D, or the voltage *ν*₂ (shown in FIGS. 2A-2D) associated with any of the resonant tank 206A, resonant tank 206B, resonant tank 206C, or resonant tank 206D.

The waveform 550A is associated with the H bridge circuit 322 switching between the switch configuration 410, the switch configuration 430 or 440, and the switch configuration 420. In the waveform 550A, the H bridge circuit 322 is in the switch configuration 430 or 440, then the switch configuration 410, then the switch configuration 430 or 440, then the switch configuration 420 in one switching cycle. In a switching cycle, the H bridge circuit 322 may be in a switch configuration for one quarter or any other suitable durations (e.g., greater or less than one quarter) of the switching cycle in the waveform 550A before switching to another switch configuration. In some embodiments, in a switching cycle, the H bridge circuit 322 is in the switch configuration 430, then the switch configuration 410, then the switch configuration 430, and the then switch configuration 420. In some embodiments, in a switching cycle, the H bridge circuit 322 is in the switch configuration 440, then the switch configuration 410, then the switch configuration 440, and the then switch configuration 420. In some embodiments, in a switching cycle, the H bridge circuit 322 is in the switch configuration 430, then the switch configuration 410, then the switch configuration 440, and the then switch configuration 420. In some embodiments, in a switching cycle, the H bridge circuit 322 is in the switch configuration 440, then the switch configuration 410, then the switch configuration 430, and the then switch configuration 420.

The waveform 550A shows two switching cycles. When the H bridge circuit 322 is in the switch configuration 410, a voltage across the resonant tank 324 may be around v. When the H bridge circuit 322 is in the switch configuration 430 or 440, the voltage across the resonant tank 324 may be around 0 V. This indicates that the resonant tank 324 may be shorted. When the H bridge circuit 322 is in the switch configuration 420, the voltage across the resonant tank 324 may be around -v. In some embodiments, v may be in a range from 200 V and 400 V.

The waveform 560A is associated with the H bridge circuit 322 repeatedly switching between the switch configuration 410 and the switch configuration 420, without switching to the switch configuration 430 or the switch configuration 440. The waveform 560A corresponds to the H bridge circuit 322 alternately and sequentially being in the switch configuration 410 and the switch configuration 420. When the H bridge circuit 322 is in the switch configuration 410, the voltage across the resonant tank 324 may be around v. When the H bridge circuit 322 is in the switch configuration 420, the voltage across the resonant tank 324 may be around -v. The waveform 560A illustrates that during a switching cycle, the H bridge circuit 322 is in the switch configuration 410 around 25% of time and is in the switch configuration 420 around 75% of time. Accordingly, the waveform 560A has an unbalanced duty cycle. In some other applications, the H bridge circuit 322 can have any other suitable unbalanced duty cycle for a switching cycle, such as but not limited to (a) 70% for the switch configuration 420 and 30% for the switch configuration 410 or (b) 80% for the switch configuration 420 and 20% for the switch configuration 410.

In a modulation method corresponding to the waveform 560A, the same or substantially the same function of shorting as the modulation method corresponding to the waveform 550A can be achieved. Moreover, the relatively high leakage current penalty associated with the switch configuration 430 of the waveform 550A is avoided for the waveform 560A. Furthermore, there is less switching in each switching cycle for generating the waveform 560A compared to generating the waveform 550A. Accordingly, the switching loss and deadtime loss are reduced for a switching cycle associated with the waveform 560A compared to a switching cycle associated with the waveform 550A.

FIG. 5B shows example waveforms 550A and 560B associated with operations of the wireless charging pad 300 in accordance with some embodiments of the present disclosure.

As noted above, the waveform 550A is associated with the H bridge circuit 322 switching between the switch configuration 410, the switch configuration 430, and the switch configuration 420 in a sequence that repeats for each switching cycle. For each switching cycle, the H bridge circuit 322 is in a switch configuration that applies a voltage of about zero Volts across the resonant tank 324 for half of the switching cycle. When the H bridge circuit 322 is in the switch configuration 410, a voltage across the resonant tank 324 may be around v. When the H bridge circuit 322 is in the switch configuration 430, the voltage across the resonant tank 324 may be around 0 V. When the H bridge circuit 322 is in the switch configuration 420, the voltage across the resonant tank 324 may be around -v.

The waveform 560B is associated with the H bridge circuit 322 repeatedly switching between the switch configuration 410 and the switch configuration 420, without switching to the switch configuration 430 or the switch configuration 440. The waveform 560B corresponds to the H bridge circuit 322 alternately and sequentially being in the switch configuration 410 and the switch configuration 420. When the H bridge circuit 322 is in the switch configuration 410, the voltage across the resonant tank 324 may be around v. When the H bridge circuit 322 is in the switch configuration 420, the voltage across the resonant tank 324 may be around -v. The waveform 560B is like the waveform 560A, except that the waveform 560B is in the switch configuration 410 more than in the switch configuration 420. For example, FIG. 5B corresponds to the H bridge circuit 322 being in the switch configuration 410 about 75% of the time and in the switch configuration 420 about 25% of time. In some other applications, the H bridge circuit 322 can have any other suitable unbalanced duty cycle for a switching cycle, such as but not limited to (a) 70% for the switch configuration 410 and 30% for the switch configuration 420 or (b) 80% for the switch configuration 410 and 20% for the switch configuration 420.

In some embodiments, the switch control circuit 326 may control the H bridge circuit 322 to alternate switching between the switch configuration 410 and the switch configuration 420 with an unbalanced duty cycle, without switching to the switch configuration 430 and/or the switch configuration 440, to avoid shorting the resonant tank 324. An unbalanced duty cycle is a non 50/50 duty cycle. With an unbalanced duty cycle, the H bridge circuit 322 can be in one of the two switch configurations at least 60% of a switching cycle and in the other of the two switch configurations a reminder of the switching cycle. In some such applications, the H bridge circuit 322 can be in one of the two switch configurations at least 70% or 80% of a switching cycle and in the other of the two switch configurations a reminder of the switching cycle. Compared with situations where the resonant tank 324 is shorted, common mode voltage and leakage current associated with the resonant tank and the H bridge circuit may be reduced for alternately and sequentially toggling between the switch configuration 410 and the switch configuration 420 with an unbalanced duty cycle.

### Example Voltage and Current Waveforms

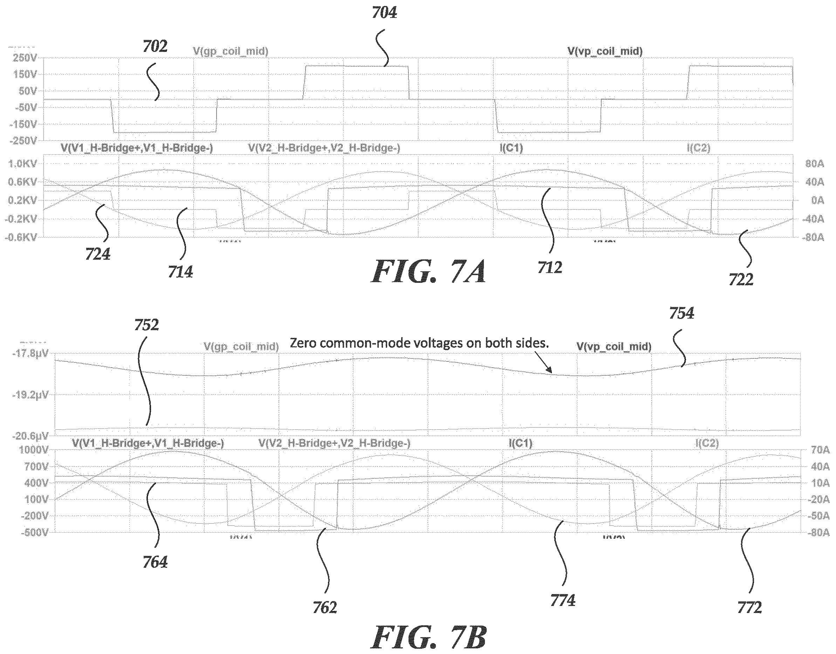

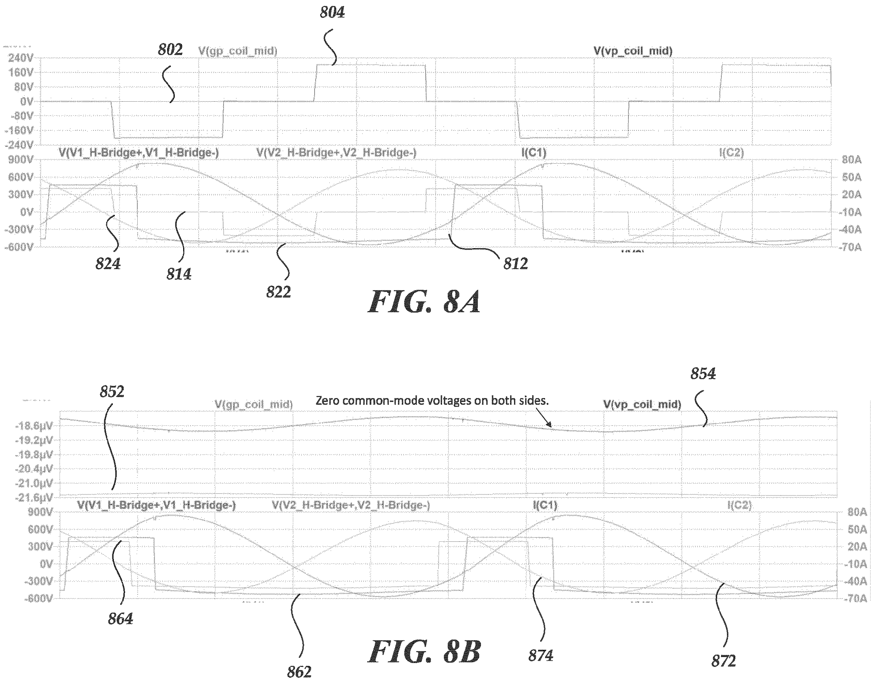

FIGS. 6, 7A, 7B, 8A, and 8B show example waveforms associated with operations of the wireless charging system 200D of FIG. 2D in accordance with some embodiments of the present disclosure. Any suitable principles and advantages disclosed with reference to any of FIGS. 7A, 7B, 8A, and 8B can also apply to any of the H bridge circuit 202A, H bridge circuit 208A, H bridge circuit 202B, H bridge circuit 208B, H bridge circuit 202C, and/or H bridge circuit 208C. For instance, the switch control circuit 326 can control any of the H bridge circuit disclosed herein in accordance with any suitable principles and advantages disclosed with reference to the waveform 560A and/or the waveform 560B.

FIG. 6 illustrates voltage and current waveforms associated with the wireless charging system 200D when both the H bridge circuit 202D and the H bridge circuit 208D switch according to the waveform 550A. A waveform 602 illustrates a common mode voltage of a ground pad (e.g., a voltage between a midpoint of the capacitor 212D and a midpoint of a ground pad coil *L*₁)*.* A waveform 604 illustrates a common mode voltage of a vehicle pad (e.g., a voltage between a midpoint of the capacitor 214D and a midpoint of a vehicle pad coil *L*₂). A waveform 612 illustrates a voltage (e.g., *ν*₁ shown in FIG. 2D) across the resonant tank 204D. A waveform 614 illustrates a voltage (e.g., *ν*₂ shown in FIG. 2D) across the resonant tank 206D. A waveform 622 illustrates a current flowing through the resonant tank 204D. A waveform 624 illustrates a current flowing through the resonant tank 206D.

The waveform 602 shows that the common mode voltage of the ground pad is non-zero and changes with a relatively wide range (e.g., fluctuates between 250 V to -250 V). This may cause significant leakage current on the ground pad of FIG. 2D. The waveform 604 shows that the common mode voltage of the vehicle pad is non-zero and changes within a relative wide range (e.g., fluctuates between 200 V to -200 V). This can be associated with significant leakage current on the vehicle pad of FIG. 2D.

FIG. 7A illustrates voltage and current waveforms associated with the wireless charging system 200D when the H bridge circuit 202D switches according to the waveform 560A and the H bridge circuit 208D switches according to the waveform 550A. A waveform 702 illustrates a common mode voltage of a ground pad (e.g., a voltage between a midpoint of the capacitor 212D and a midpoint of a ground pad coil *L*₁)*.* A waveform 704 illustrates a common mode voltage of a vehicle pad (e.g., a voltage between a midpoint of the capacitor 214D and a midpoint of a vehicle pad coil L₂). A waveform 712 illustrates a voltage (e.g., *ν*₁ shown in FIG. 2D) across the resonant tank 204D. A waveform 714 illustrates a voltage (e.g., *ν*₂ shown in FIG. 2D) across the resonant tank 206D. A waveform 722 illustrates a current flowing through the resonant tank A. The waveform 724 illustrates a current flowing through the resonant tank 206D.

The waveform 702 shows that the common mode voltage of the ground pad is around zero (e.g., fluctuates around 0 V). This is associated with significantly reduced leakage current on the ground pad of FIG. 2D. The waveform 704 shows that the common mode voltage of the vehicle pad is non-zero (e.g., fluctuates between 200 V to -200 V). This can be associated with significant leakage current on the vehicle pad of FIG. 2D.

FIG. 7B illustrates voltage and current waveforms associated with the wireless charging system 200D when both the H bridge circuit 202D and the H bridge circuit 208D switch according to the waveform 560A. A waveform 752 illustrates a common mode voltage of a ground pad (e.g., a voltage between a midpoint of the capacitor 212D and a midpoint of a ground pad coil *L*₁)*.* A waveform 754 illustrates a common mode voltage of a vehicle pad (e.g., a voltage between a midpoint of the capacitor 214D and a midpoint of a vehicle pad coil *L*₂). A waveform 762 illustrates a voltage (e.g., *ν*₁ shown in FIG. 2D) across the resonant tank 204D. A waveform 764 illustrates a voltage (e.g., *ν*₂ shown in FIG. 2D) across the resonant tank 206D. A waveform 772 illustrates a current flowing through the resonant tank 204D. A waveform 774 illustrates a current flowing through the resonant tank 206D.

FIG. 7B indicates that a magnitude of the common mode voltage on both the ground pad and the vehicle pad is less than about 20 microvolts when H bridge circuits 202D and 208D in the wireless charging system 200D are both switched in a manner corresponding to the waveform 560A. The waveform 752 shows that the common mode voltage of the ground pad is around zero (e.g., fluctuates around 0 V). This is associated with significantly reduced leakage current on the ground pad of FIG. 2D. The waveform 754 shows that the common mode voltage of the vehicle pad is around zero (e.g., fluctuates around 0 V). This is associated with significantly reduced leakage current on the vehicle pad of FIG. 2D.

Simulations indicate similar performance associated with the waveform 560A and the waveform 560B for the wireless charging system 200D.

FIG. 8A illustrates voltage and current waveforms associated with the wireless charging system 200D when the H bridge circuit 202D switches according to the waveform 560B and the H bridge circuit 208D switches according to the waveform 550A. A waveform 802 illustrates a common mode voltage of a ground pad (e.g., a voltage between a midpoint of the capacitor 212D and a midpoint of a ground pad coil *L*₁)*.* A waveform 804 illustrates a common mode voltage of a vehicle pad (e.g., a voltage between a midpoint of the capacitor 214D and a midpoint of a vehicle pad coil *L*₂). A waveform 812 illustrates a voltage (e.g., *ν*₁ shown in FIG. 2D) across the resonant tank 204D. A waveform 814 illustrates a voltage (e.g., *ν*₂ shown in FIG. 2D) across the resonant tank 206D. A waveform 822 illustrates a current flowing through the resonant tank 204D. A waveform 824 illustrates a current flowing through the resonant tank 206D.

The waveform 802 shows that the common mode voltage of the ground pad is around zero (e.g., fluctuates around 0 V). This is associated with reduced leakage current on the ground pad of FIG. 2D. The waveform 804 shows that the common mode voltage of the vehicle pad is non-zero and changes in a relatively wide range (e.g., fluctuates between 200 V to -200 V). This can be associated with significant leakage current on the vehicle pad of FIG. 2D.

FIG. 8B illustrates voltage and current waveforms associated with the wireless charging system 200D when both the H bridge circuit 202D and the H bridge circuit 208D switch according to the waveform 560B. A waveform 852 illustrates a common mode voltage of a ground pad (e.g., a voltage between a midpoint of the capacitor 212D and a midpoint of a ground pad coil *L*₁)*.* A waveform 854 illustrates a common mode voltage of a vehicle pad (e.g., a voltage between a midpoint of the capacitor 214D and a midpoint of a vehicle pad coil *L*₂). A waveform 862 illustrates a voltage (e.g., *ν*₁ shown in FIG. 2D) across the resonant tank 204D. A waveform 864 illustrates a voltage (e.g., *ν*₂ shown in FIG. 2D) across the resonant tank 206D. A waveform 872 illustrates a current flowing through the resonant tank 204D. A waveform 874 illustrates a current flowing through the resonant tank 206D.

FIG. 8B indicates that a magnitude of the common mode voltage on both the ground pad and the vehicle pad is less than about 20 microvolts when H bridge circuits 202D and 208D in the wireless charging system 200D are both switched in a manner corresponding to the waveform 560B. The waveform 852 shows that the common mode voltage of the ground pad is around zero (e.g., fluctuates around 0 V). This is associated with significantly reduced leakage current on the ground pad of FIG. 2D. The waveform 854 shows that the common mode voltage of the vehicle pad is around zero (e.g., fluctuates around 0 V). This is associated with significantly reduced leakage current on the ground pad of FIG. 2D.

### Wireless Charging Systems with Stacked Half Bridge Circuits

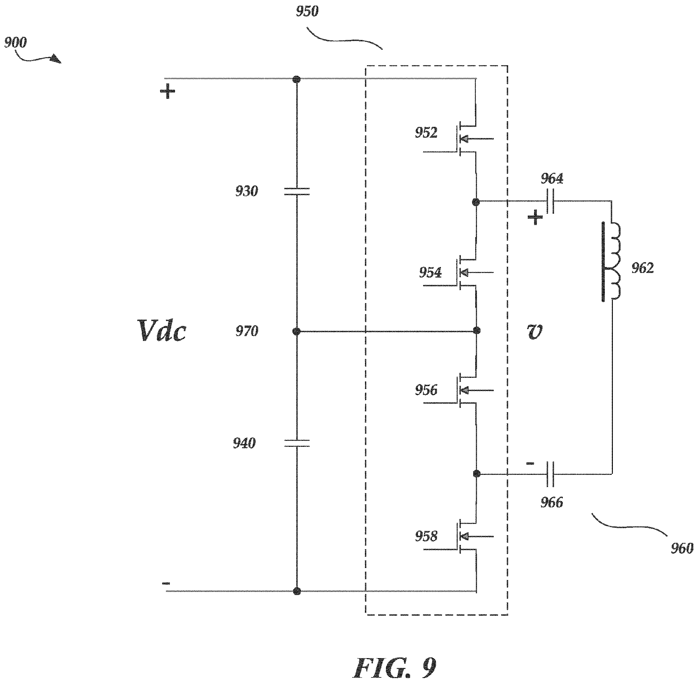

FIG. 9 illustrates example circuit schematic diagram of a portion of a wireless charging system 900 in accordance with some embodiments of the present disclosure. The portion of the wireless charging system 900 can be inside a vehicle pad and/or a ground pad, such as the vehicle pads and/or the grounds pads shown in FIGS. 2A - 2D. In certain wireless charging systems, a vehicle pad can include a stacked half bridge switching circuit and a ground pad can include an H bridge switching circuit.

As shown in FIG. 9, the portion of the wireless charging system 900 includes a capacitor 930, a capacitor 940, a stacked half bridge circuit 950, and a resonant tank 960. The capacitor 930 and the capacitor 940 are connected in series in FIG. 9. The stacked half bridge circuit 950 includes a switch 952, a switch 954, a switch 956, and a switch 958 that are connected in series. The resonant tank 960 includes an inductor 962, a capacitor 964, and a capacitor 966 that are connected in series. The portion of the wireless charging system 900 may enable wireless power transfer based on principles similar to those applicable to the wireless charging systems 200A, 200B, 200C, and 200D.

In some embodiments, the stacked half bridge circuit 950 may be integrated into the wireless charging systems 200A, 200B, 200C, and 200D. The stacked half bridge circuit 950 can replace one or more of the H bridge circuits of these wireless charging systems. For example, the stacked half bridge circuit 950 may replace the H bridge circuit 208A of the wireless charging system 200A. As another example, the stacked half bridge circuit 950 may replace the H bridge circuit 202B of the wireless charging systems 200B. As one more example, instances of the stacked half bridge circuit 950 can replace the H bridge circuits 202A and 208A in the wireless charging system 200A. Compared with the wireless charging systems 200A, 200B, 200C, and 200D shown in FIGS. 2A - 2D that utilize H bridge circuits to facilitate wireless power transfer, the portion of the wireless charging system 900 may achieve higher charging voltages by utilizing the stacked half bridge circuit 950 for wireless power transfer.

As shown in FIG. 9, the voltage across the resonant tank 960 is illustrated as v Volts. The voltage across the stacked half bridge circuit 950 is illustrated as *Vdc* Volts. The capacitor 930 and the capacitor 940 are connected to each other at a terminal point 970.

### Additional Example Wireless Charging Pad

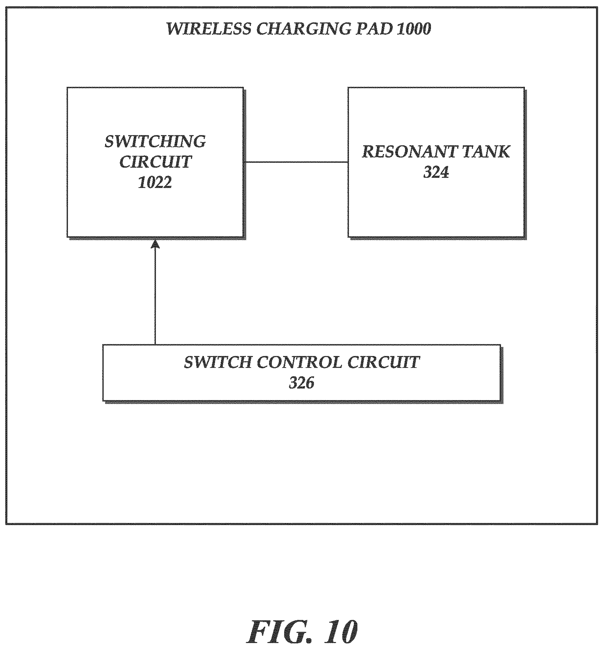

FIG. 10 illustrates an example block diagram of a wireless charging pad 1000 according to some embodiments of the present disclosure. The wireless charging pad 1000 can function and/or be implemented similarly to the wireless charging pad 300 of FIG. 3. The wireless charging pad 1000 can be a vehicle pad. The wireless charging pad 1000 can a ground pad. As shown in FIG. 10, the wireless charging pad 1000 includes the resonant tank 324, a switching circuit 1022, and the switch control circuit 326. The switching circuit 1022 can be a H bridge circuit (e.g., the H bridge circuit 322) or a stacked half bridge circuit (e.g., the stacked half bridge circuit 950). The resonant tank 324 can correspond to any of the resonant tank 204A, resonant tank 206A, resonant tank 204B, resonant tank 206B, resonant tank 204C, resonant tank 206C, resonant tank 204D, resonant tank 206D, and resonant tank 960.

In some embodiments, when the switching circuit 1022 is a stacked half bridge circuit (e.g., the stacked half bridge circuit 950), the switch control circuit 326 may control switches of the stacked half bridge circuit to toggle between a first switch configuration (e.g., a high voltage configuration) that is associated with a high voltage and a second switch configuration (e.g., a low voltage configuration) that is associated with a low voltage. During this toggling, the switch control circuit 326 may not control switches of the stacked half bridge circuit to be in a third switch configuration (e.g., a medium voltage configuration) that is associated with a medium voltage. As such, a voltage across the resonant tank 324 interfaced with the stacked half bridge circuit may be at the high voltage (e.g., *Vdc* Volts illustrated in FIG. 9) when the stacked half bridge circuit is in the first switch configuration, or at the low voltage (e.g., 0 Volts) when the stacked half bridge circuit is in the second switch configuration. However, the voltage across the resonant tank 324 may not be at the medium voltage (e.g., 0.5*Vdc* Volts) that is half or 50% of the high voltage when toggling between the first switch configuration and the second switch configuration. Advantageously, leakage current associated with a wireless charging system can be reduced. Such switching operation can also reduce energy consumption, reduce electromagnetic interference, and/or minimize conducted and radiative emissions. Further, controlling the stacked half bridge circuit to switch between the first switch configuration and the second switch configuration without switching to the third switch configuration may increase a voltage range for charging a battery pack of a vehicle (e.g., allow charging the battery pack at higher voltage).

In some embodiments, when the switching circuit 1022 is a H bridge circuit, the switch control circuit 326 may control switches of the H bridge as described above with reference to FIGS. 3, 4A - 4D, and/or 5A - 5B.

In certain applications, the switch control circuit 326 can detect that the switching circuit 1022 is a stacked half bridge circuit and control the switching circuit 1022 based on this detection. In certain applications, the switch control circuit 326 can detect that the switching circuit 1022 is an H bridge circuit and control the switching circuit 1022 based on this detection.

### Example Stacked Half Bridge Circuit Configurations

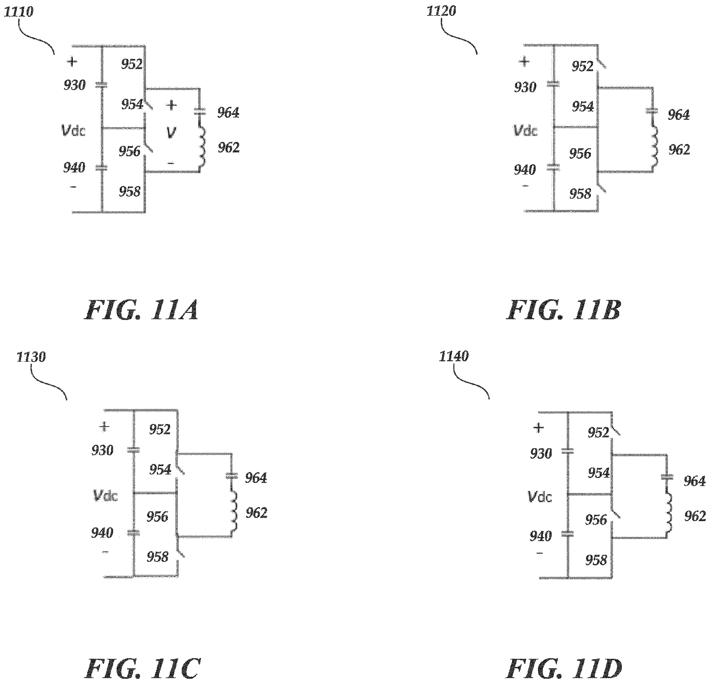

FIGS. 11A, 11B, 11C, and 11D illustrate example switch configurations of the switching circuit 1022 of the wireless charging pad 1000 of FIG. 10 in accordance with some embodiments of the present disclosure. More specifically, FIGS. 11A - 11D illustrate example switch configurations of the switching circuit 1022 when the switching circuit 1022 is a stacked half bridge circuit (e.g., the stacked half bridge circuit 950 of FIG. 9). FIG. 11A shows the switching circuit 1022 may be configured by the switch control circuit 326 to a switch configuration 1110, which can be referred to as a high voltage configuration. FIG. 11B shows the switching circuit 1022 may be configured by the switch control circuit 326 to a switch configuration 1120, which can be referred to as a low voltage configuration. FIG. 11C shows the switching circuit 1022 may be configured by the switch control circuit 326 to a switch configuration 1130, which can be referred to as a medium voltage 1 configuration. FIG. 11D shows the switching circuit 1022 may be configured by the switch control circuit 326 to a switch configuration 1140, which can be referred to as a medium voltage 2 configuration.

The switching circuit 1022 illustrated in FIGS. 11A, 11B, 11C, and 11D includes four switches (e.g., switch 952, switch 954, switch 956, and switch 958). These switches can be any suitable switches for power electronics, such as n type field effect transistors arranged to switch sufficient voltage for wireless charging disclosed herein. In certain applications, the switching circuit 1022 can include metal oxide field effect transistors (MOSFETs). Alternatively or additionally, the switching circuit 1022 can include insulated-gate bipolar transistors (IGBTs). The switches of the switching circuit 1022 can be arranged to pass 100s of Volts.

As shown in FIG. 11A, in switch configuration 1110, the switch 952 is closed, the switch 954 is open, the switch 958 is closed, and the switch 956 is open. In the switch configuration 1110, voltage Vdc is across a resonant tank that includes the inductor 962 and capacitor 964. As shown in FIG. 11B, in switch configuration 1120, the switch 952 is open, the switch 954 is closed, the switch 958 is open, and the switch 956 is closed. In the switch configuration 1120, 0 Volts are across the resonant tank that includes the inductor 962 and capacitor 964. As shown in FIG. 11C, in switch configuration 1130, the switch 954 is open, the switch 952 is closed, the switch 956 is closed, and the switch 958 is open. In the switch configuration 1130, voltage 0.5Vdc is across the resonant tank that includes the inductor 962 and capacitor 964. As shown in FIG. 11D, in switch configuration 1140, the switch 954 is closed, the switch 952 is open, the switch 956 is open, and the switch 958 is closed. In the switch configuration 1140, voltage 0.5Vdc is across the resonant tank that includes the inductor 962 and capacitor 964.

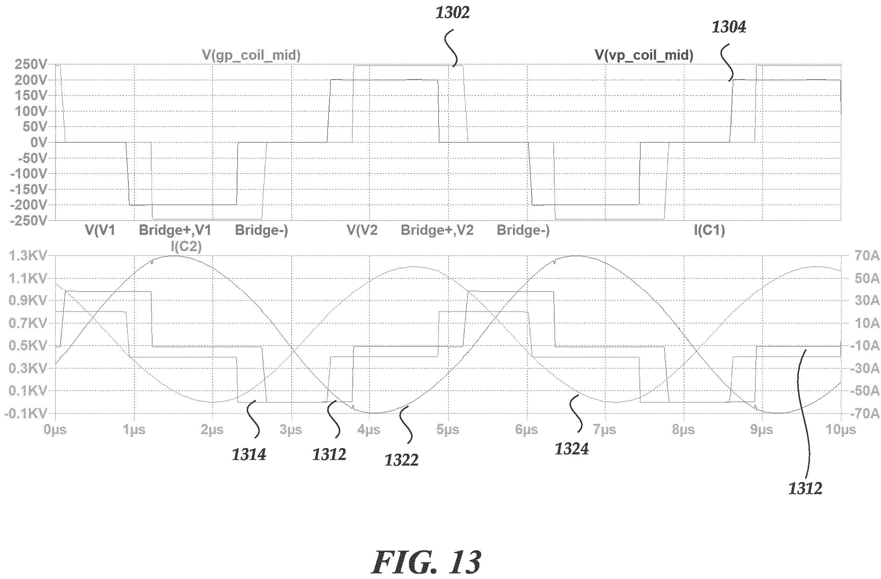

In some embodiments, rather than switching to the switch configuration 1130 and/or the switch configuration 1140, the switch control circuit 326 may control the switch 952, switch 954, switch 956, and switch 958 to switch among the switch configuration 1110 and the switch configuration 1120 with unequal temporal duration. As such, voltage across the resonant tank 324 may not stay at a medium voltage for a considerable portion of time (e.g., > 10% of operation time) during wireless charging of a vehicle. Compared with situations where the switching circuit 1022 switches to the switch configuration 1130 and/or the switch configuration 1140, common mode voltage and leakage current associated with the resonant tank 324 and the switching circuit 1022 may be reduced, for example as will be discussed with reference to FIGS. 13, 14, and 15. Additionally, electromagnetic interference, radiative emissions, and/or energy consumption associated with the wireless charging pad 1000 can also be reduced.

### Additional Example Voltage Swing Waveforms

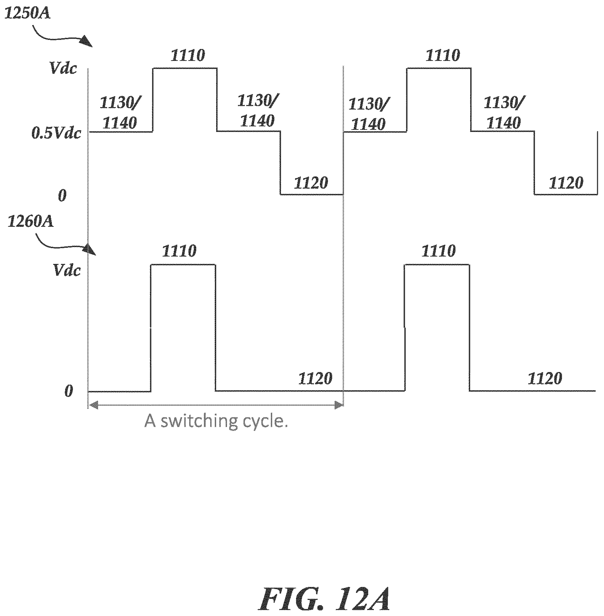

FIGS. 12A-12B show example waveforms of voltage swings associated with operations of the wireless charging pad of FIG. 10 in accordance with some embodiments of the present disclosure. FIG. 12A shows example waveforms 1250A and 1260A associated with operations of the wireless charging pad 1000 of FIG. 10 in accordance with some embodiments of the present disclosure. More specifically, the waveforms 1250A and 1260A illustrate voltage swings and voltage across the resonant tank 324 as the switching circuit 1022 switches between various switch configurations and where the switching circuit 1022 is a stacked half bridge circuit (e.g., the stacked half bridge circuit 950 of FIG, 9). The voltage across the resonant tank 324 of FIG. 10 may correspond to the voltage v (shown in FIG. 9) associated with the resonant tank 960.

The waveform 1250A is associated with the switching circuit 1022 switching between the switch configuration 1110, the switch configuration 1130 or 1140, and the switch configuration 1120. In the waveform 1250A, the switching circuit 1022 is in the switch configuration 1130 or 1140, then the switch configuration 1110, then the switch configuration 1130 or 1140, then the switch configuration 1120 in one switching cycle. In a switching cycle, the switching circuit 1022 may be in a switch configuration for one quarter or any other suitable durations (e.g., greater or less than one quarter) of the switching cycle in the waveform 1250A before switching to another switch configuration. In some embodiments, in a switching cycle, the switching circuit 1022 is in the switch configuration 1130, then the switch configuration 1110, then the switch configuration 1130, and the then switch configuration 1120. In some embodiments, in a switching cycle, the switching circuit 1022 is in the switch configuration 1140, then the switch configuration 1110, then the switch configuration 1140, and the then switch configuration 1120. In some embodiments, in a switching cycle, the switching circuit 1022 is in the switch configuration 1130, then the switch configuration 1110, then the switch configuration 1140, and the then switch configuration 1120. In some embodiments, in a switching cycle, the switching circuit 1022 is in the switch configuration 1140, then the switch configuration 1110, then the switch configuration 1130, and the then switch configuration 1120.

The waveform 1250A shows two switching cycles. When the switching circuit 1022 is in the switch configuration 1110, a voltage across the resonant tank 324 may be around a high voltage (e.g., *Vdc*). When the switching circuit 1022 is in the switch configuration 1130 or 1140, the voltage across the resonant tank 324 may be around a medium voltage (e.g., 0.5*Vdc*). When the switching circuit 1022 is in the switch configuration 1120, the voltage across the resonant tank 324 may be around a low voltage (e.g., 0 V). In some embodiments, *Vdc* may be in a range from 700 V to 1000 V.

The waveform 1260A is associated with the switching circuit 1022 repeatedly switching between the switch configuration 1110 and the switch configuration 1120, without switching to the switch configuration 1130 or the switch configuration 1140. The waveform 1260A corresponds to the switching circuit 1022 alternately and sequentially being in the switch configuration 1110 and the switch configuration 1120. When the switching circuit 1022 is in the switch configuration 1110, the voltage across the resonant tank 324 may be around *Vdc.* When the switching circuit 1022 is in the switch configuration 1120, the voltage across the resonant tank 324 may be around 0 Volts. The waveform 1260A illustrates that during a switching cycle, the switching circuit 1022 is in the switch configuration 1110 around 25% of time and is in the switch configuration 1120 around 75% of time. Accordingly, the waveform 1260A has an unbalanced duty cycle. In some other applications, the switching circuit 1022 can have any other suitable unbalanced duty cycle for a switching cycle, such as but not limited to (a) 70% for the switch configuration 1120 and 30% for the switch configuration 1110 or (b) 80% for the switch configuration 1120 and 20% for the switch configuration 1110.

In a modulation method corresponding to the waveform 1260A, the same or substantially the same function of shorting as the modulation method corresponding to the waveform 1250A can be achieved. Moreover, the relatively high leakage current penalty associated with the switch configuration 1130 or 1140 of the waveform 1250A is avoided for the waveform 1260A. Furthermore, there is less switching in each switching cycle for generating the waveform 1260A compared to generating the waveform 1250A. Accordingly, the switching loss and deadtime loss are reduced for a switching cycle associated with the waveform 1260A compared to a switching cycle associated with the waveform 1250A. Additionally, switching operations based on the waveform 1260A may result in reduced energy consumption, reduced electromagnetic interference, and/or reduced conducted and radiative emissions.

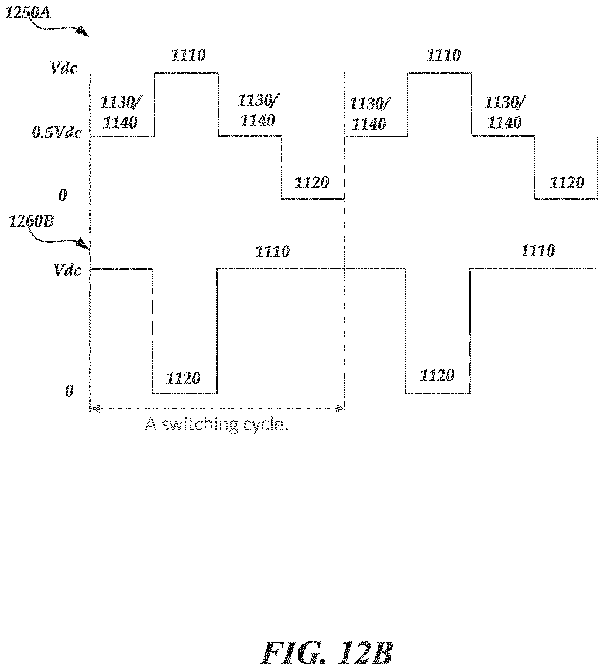

FIG. 12B shows example waveforms 1250A and 1260B associated with operations of the wireless charging pad 1000 (e.g., where the switching circuit 1022 is a stacked half bridge circuit) in accordance with some embodiments of the present disclosure. The waveform 1250A is the same in FIGS. 12A and 12B. As noted above, the waveform 1250A is associated with the switching circuit 1022 switching between the switch configuration 1110, the switch configuration 1130/1140, and the switch configuration 1120 in a sequence that repeats for each switching cycle. When the switching circuit 1022 is in the switch configuration 1110, a voltage across the resonant tank 324 may be around *Vdc.* When the switching circuit 1022 is in the switch configuration 1130/1140, the voltage across the resonant tank 324 may be around 0.5*Vdc.* When the switching circuit 1022 is in the switch configuration 1120, the voltage across the resonant tank 324 may be around 0 Volts.

The waveform 1260B is associated with the switching circuit 1022 repeatedly switching between the switch configuration 1110 and the switch configuration 1120, without switching to the switch configuration 1130 or the switch configuration 1140. The waveform 1260B corresponds to the switching circuit 1022 alternately and sequentially being in the switch configuration 1110 and the switch configuration 1120. When the switching circuit 1022 is in the switch configuration 1110, the voltage across the resonant tank 324 may be around *Vdc.* When the switching circuit 1022 is in the switch configuration 1120, the voltage across the resonant tank 324 may be around 0 Volts. The waveform 1260B is like the waveform 1260A, except that the waveform 1260B is in the switch configuration 1120 less than in the switch configuration 1110. For example, FIG. 12B corresponds to the switching circuit 1022 being in the switch configuration 1110 about 75% of the time and in the switch configuration 1120 about 25% of time. In some other applications, the switching circuit 1022 can have any other suitable unbalanced duty cycle for a switching cycle, such as but not limited to (a) 70% for the switch configuration 1110 and 30% for the switch configuration 1120 or (b) 80% for the switch configuration 1110 and 20% for the switch configuration 1120. Compared to a switching cycle associated with the waveform 1250A, common mode voltage and leakage current associated with the resonant tank 324 and the switching circuit 1022 may be reduced for alternately and sequentially toggling between the switch configuration 1110 and the switch configuration 1120 with an unbalanced duty cycle. Additionally, switching operations based on the waveform 1260B may result in reduced energy consumption, reduced electromagnetic interference, and/or reduced conducted and radiative emissions.

### Additional Example Voltage and Current Waveforms

FIGS. 13, 14, and 15 show example voltage and current waveforms associated with operations of the wireless charging pad 1000 (e.g., when the switching circuit 1022 is a stacked half bridge circuit) of FIG. 10 in accordance with some embodiments of the present disclosure.

FIG. 13 illustrates voltage and current waveforms associated with a wireless charging system that implements the example circuit schematic diagram of FIG. 9 in a ground pad and a vehicle pad when the stacked half bridge circuit 950 switches according to the waveform 1250A. A waveform 1302 illustrates a common mode voltage of a ground pad (e.g., a voltage between the terminal point 970 and a midpoint of the inductor 962 when implemented in the ground pad). A waveform 1304 illustrates a common mode voltage of a vehicle pad (e.g., a voltage between the terminal point 970 and a midpoint of the inductor 962 when implemented in the vehicle pad). A waveform 1312 illustrates a voltage across the resonant tank 960 that is implemented in the ground pad. A waveform 1314 illustrates a voltage across the resonant tank 960 that is implemented in the vehicle pad. A waveform 1322 illustrates a current flowing through the resonant tank 960 that is implemented in the ground pad. A waveform 1324 illustrates a current flowing through the resonant tank 960 that is implemented in the vehicle pad.

The waveform 1302 shows that the common mode voltage of the ground pad is non-zero and changes with a relatively wide range (e.g., fluctuates between 250 V to -250 V). This may cause significant leakage current on the ground pad. The waveform 1304 shows that the common mode voltage of the vehicle pad is non-zero and changes within a relative wide range (e.g., fluctuates between 200 V to -200 V). This can be associated with significant leakage current on the vehicle pad.

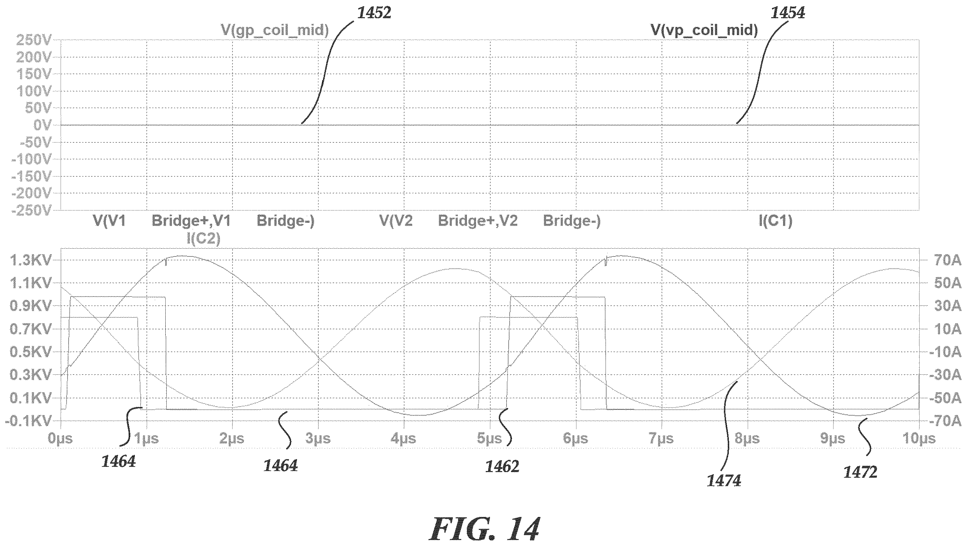

FIG. 14 illustrates voltage and current waveforms associated with a wireless charging system that implements the example circuit schematic diagram of FIG. 9 in a ground pad and a vehicle pad when the stacked half bridge circuit 950 switches according to the waveform 1260A. A waveform 1452 illustrates a common mode voltage of a ground pad (e.g., a voltage between the terminal point 970 and a midpoint of the inductor 962 when implemented in the ground pad). A waveform 1454 illustrates a common mode voltage of a vehicle pad (e.g., a voltage between the terminal point 970 and a midpoint of the inductor 962 when implemented in the vehicle pad). A waveform 1462 illustrates a voltage across the resonant tank 960 that is implemented in the ground pad. A waveform 1464 illustrates a voltage across the resonant tank 960 that is implemented in the vehicle pad. A waveform 1472 illustrates a current flowing through the resonant tank 960 that is implemented in the ground pad. A waveform 1474 illustrates a current flowing through the resonant tank 960 that is implemented in the vehicle pad.

FIG. 14 indicates that a magnitude of the common mode voltage on both the ground pad and the vehicle pad is close to 0 Volts when stacked half bridge circuit 950 implemented in the ground pad and the vehicle pad both switch in a manner corresponding to the waveform 1260A. The waveform 1452 shows that the common mode voltage of the ground pad is around zero (e.g., fluctuates around 0 V). This is associated with significantly reduced leakage current on the ground pad. The waveform 1454 shows that the common mode voltage of the vehicle pad is around zero (e.g., fluctuates around 0 V). This is associated with significantly reduced leakage current on the vehicle.

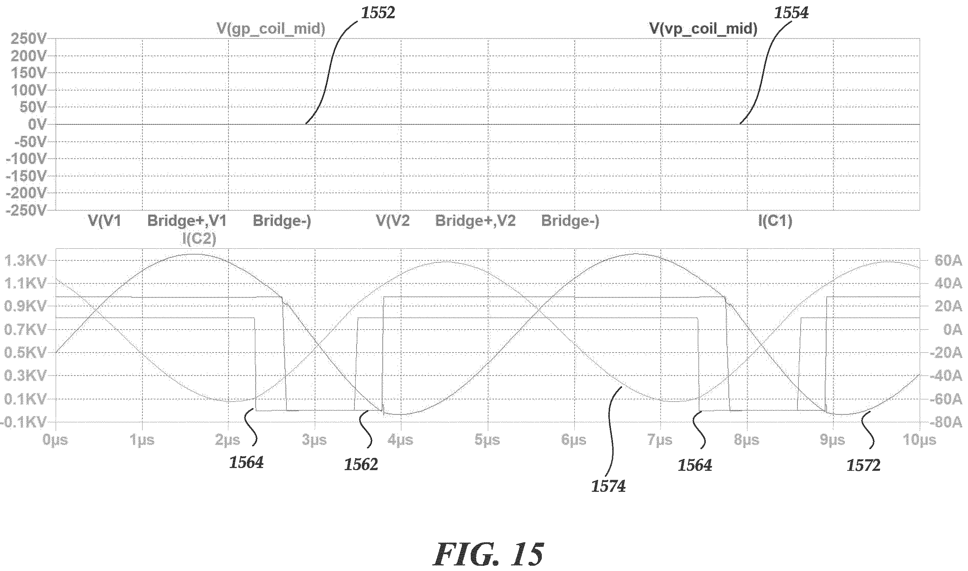

FIG. 15 illustrates voltage and current waveforms associated with a wireless charging system that implements the example circuit schematic diagram of FIG. 9 in a ground pad and a vehicle pad when the stacked half bridge circuit 950 switches according to the waveform 1260B. A waveform 1552 illustrates a common mode voltage of a ground pad (e.g., a voltage between the terminal point 970 and a midpoint of the inductor 962 when implemented in the ground pad). A waveform 1554 illustrates a common mode voltage of a vehicle pad (e.g., a voltage between the terminal point 970 and a midpoint of the inductor 962 when implemented in the vehicle pad). A waveform 1562 illustrates a voltage across the resonant tank 960 that is implemented in the ground pad. A waveform 1564 illustrates a voltage across the resonant tank 960 that is implemented in the vehicle pad. A waveform 1572 illustrates a current flowing through the resonant tank 960 that is implemented in the ground pad. A waveform 1574 illustrates a current flowing through the resonant tank 960 that is implemented in the vehicle pad.

FIG. 15 indicates that a magnitude of the common mode voltage on both the ground pad and the vehicle pad is close to 0 Volts when stacked half bridge circuit 950 implemented in the ground pad and the vehicle pad both switch in a manner corresponding to the waveform 1260B. The waveform 1552 shows that the common mode voltage of the ground pad is around zero (e.g., fluctuates around 0 V). This is associated with significantly reduced leakage current on the ground pad. The waveform 1554 shows that the common mode voltage of the vehicle pad is around zero (e.g., fluctuates around 0 V). This is associated with significantly reduced leakage current on the vehicle.

### Conclusion

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration. Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some embodiments, such processes or portions thereof may be implemented on multiple computing devices and/or multiple processors, serially or in parallel.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially concurrently or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

## Claims

1. A method of wireless power transfer, the method comprising:
toggling a switching circuit of a ground pad alternately and sequentially between a first switch configuration and a second switch configuration with an unbalanced duty cycle,
wherein a voltage across a resonant tank electrically connected to the switching circuit is different from a medium voltage for both the first switch configuration and the second switch configuration, and
wherein the switching circuit is configured to provide a high voltage, a low voltage, or the medium voltage across the resonant tank; and
causing wireless power transfer from the ground pad to a vehicle pad of a vehicle using the voltage.

2. The method of Claim 1, wherein the medium voltage is associated with a third switch configuration to which the switching circuit does not toggle during the toggling.

3. The method of Claim 1 or 2, wherein the switching circuit is an H bridge circuit, and wherein the medium voltage is 0 Volts, or wherein the switching circuit is a stacked half bridge circuit, and wherein the medium voltage is half of a first voltage associated with the first switch configuration.

4. The method of one of the preceding claims, wherein the toggling comprises being in the first switch configuration for at least 60% of a switching cycle and being in the second switch configuration for a remainder of the switching cycle, and/or wherein the toggling is performed in response to detecting a voltage of a battery pack of the vehicle satisfies a threshold, and/or , wherein the toggling is performed in response to detecting a charge level of a battery pack of the vehicle satisfies a threshold.

5. The method of one of the preceding claims, wherein the voltage across the resonant tank has an opposite polarity for the second switch configuration than for the first switch configuration.

6. The method of one of the preceding claims, wherein the vehicle comprises a battery pack that is configured to charge based on the wireless power transfer, and wherein a voltage range of the battery pack of the vehicle is between 100 Volts and 1000 Volts.

7. A method of operating a vehicle pad in a wireless charging environment, the method comprising:
wirelessly receiving power from a ground pad at the vehicle pad of a vehicle, the vehicle pad comprising a switching circuit; and
toggling the switching circuit alternately and sequentially between a first switch configuration and a second switch configuration with an unbalanced duty cycle, wherein the first switch configuration is associated with a high voltage across a resonant tank, wherein the second switch configuration is associated with a low voltage across the resonant tank,
wherein the switching circuit is configured to provide one of the high voltage, the low voltage, or a medium voltage across the resonant tank, and
wherein the medium voltage is below the high voltage and above the low voltage.

8. The method of Claim 7, wherein the medium voltage is associated with a third switch configuration to which the switching circuit does not toggle during the toggling.

9. The method of Claim 7 or 8, wherein the toggling comprises being in the first switch configuration for at least 60% of a switching cycle and being in the second switch configuration for a remainder of the switching cycle.

10. The method of one of Claims 7 to 9, wherein a voltage across the resonant tank has an opposite polarity for the second switch configuration than for the first switch configuration.

11. The method of one of Claims 7 to 10, further comprising charging a battery pack of the vehicle based on the power wirelessly received from the ground pad.

12. A wireless charging pad comprising:
a resonant tank comprising a coil arranged for wireless power transfer;
a switching circuit electrically connected to the resonant tank, the switching circuit configurable into at least a first switch configuration associated with a high voltage across the resonant tank, a second switch configuration associated with a low voltage across the resonant tank, and a third switch configuration associated with a medium voltage across the resonant tank, wherein the medium voltage is greater than the low voltage and less than the high voltage; and
a switch control circuit configured to toggle the switching circuit alternately and sequentially between the first switch configuration and the second switch configuration with an unbalanced duty cycle,
wherein the wireless charging pad is configured to transfer sufficient wireless power for charging a battery pack of a vehicle, the battery pack having an operating voltage of at least 350 Volts.

13. The wireless charging pad of Claim 12, wherein the switching circuit comprises an H bridge circuit, and wherein the medium voltage is 0 Volts, and/or wherein a voltage across the resonant tank has an opposite polarity for the second switch configuration than for the first switch configuration.

14. The wireless charging pad of Claim 12 or 13, wherein the switching circuit comprises a stacked half bridge circuit, and wherein the medium voltage is half of the high voltage.

15. The wireless charging pad of one of Claims 12 to 14, wherein to toggle the switching circuit comprises being in the first switch configuration for at least 60% of a switching cycle and being in the second switch configuration for a remainder of the switching cycle, and/or wherein to toggle the switching circuit alternately and sequentially is performed in response to detecting a voltage of the battery pack satisfies a threshold.
